# FASCICULE DE BREVET EUROPEEN

(11) **EP 2 226 664 B1**
(45) Date de publication et mention de la délivrance du brevet: **05.06.2013**
(21) Numéro de dépôt: 10154163.9
(22) Date de dépôt: 19.02.2010
(51) Int. Cl.: G02B 6/44, H02G 1/12

(54) **Outil de découpe d'un fourreau d'un câble de transmission**
Schneidwerkzeug für Hülle eines Verbindungskabels
Cutting tool for sheath of a transmission cable

(30) Priorité: 27.02.2009 FR 0951265
(43) Date de publication de la demande: 08.09.2010
(73) Titulaire: France Télécom, 75015 Paris (FR)
(72) Inventeur: Landos, Julien, 22700 Perros Guirec (FR); Petit, Régis, 22300 Ploubezre (FR); Lecoq, Daniel, 22140 Berhet (FR)

(56) Documents cités:
- FR-A1- 2 776 395
- US-A- 4 947 549
- US-A- 5 050 302
- US-A- 6 079 297
- US-A1- 2005 210 681

## Description

L'invention se situe dans le domaine des télécommunications, et plus particulièrement le domaine des outils de découpe de câbles de transmission tels que des câbles de fibres optiques ou des câbles de paires de cuivre torsadées.

Un câble de transmission comporte le plus souvent un fourreau dans lequel est placé un milieu de transmission tel que des fibres optiques gainées, des faisceaux de fibres optiques ou des fils de cuivre. Afin de conférer aux câbles de transmission des propriétés de résistance mécanique notamment à la traction, les fourreaux comprennent des renforts, tels que par exemple des fils métalliques.

Lors d'opérations de câblage d'immeubles, il est nécessaire d'accéder au milieu de transmission afin de pouvoir raccorder un usager à un réseau de communication. Il faut alors découper le fourreau du câble de transmission pour ainsi accéder au milieu de transmission.

Il est connu du document de brevet FR 2 776 395 au nom du déposant un dispositif de découpe de fourreau de câbles de transmission optique.

Un tel dispositif de découpe comprend un support constitué de deux pièces métalliques montées coulissantes le long de deux colonnes parallèles. L'éloignement entre les deux pièces est fonction du diamètre du câble de transmission à travailler. Un outil de coupe est monté fixe sur chacune des deux pièces, de même que des guides pour le câble de transmission. Les deux outils de coupe sont montés en vis-à-vis et permettent, lorsque le dispositif de coupe est déplacé le long du câble de transmission lors d'une opération de découpe, de réaliser une découpe par éclatement du fourreau du câble de transmission. En d'autres mots, lors d'une opération de découpe, le fourreau du câble de transmission est découpé en deux parties sensiblement égales.

Cependant, lors des opérations de découpe, le câble de transmission peut se tordre ou effectuer une rotation dans l'outil de découpe. Il en résulte un risque de coupure involontaire des renforts du câble de transmission ou l'obtention d'une découpe non optimisée. La section de câble de transmission ainsi découpée est alors inutilisable.

Un dispositif de découpe selon le préambule de la revendication 1 est connu du document US-A-6 079 297.

Il existe donc un besoin d'un dispositif de découpe de fourreaux de câbles de transmission qui ne présente pas de tels inconvénients.

L'invention répond à ce besoin en proposant un dispositif de découpe d'un fourreau d'un câble de transmission comprenant :
- des moyens de maintien oblongs du câble lors d'opérations de découpe,
- des moyens de guidage d'un outil de coupe, le câble et les moyens de guidage étant agencés selon une longueur des moyens de maintien, l'outil de coupe étant monté mobile le long des moyens de guidage, les moyens de guidage comprennent une fente pratiquée dans les moyens de maintien, la fente étant agencée pour permettre un coulissement de l'outil de coupe.

Dans la solution proposée, le câble de transmission est immobilisé par les moyens de maintien de sorte que lors des opérations de découpe, c'est l'outil de coupe qui se déplace par rapport à l'ensemble moyens de maintien-câble de transmission et non pas le câble de transmission qui se déplace par rapport à l'ensemble support-outil de coupe comme c'est le cas dans l'art antérieur.

Les moyens de maintien sont oblongs, c'est-à-dire qu'ils sont plus longs que profond.

Le câble de transmission étant maintenu par les moyens de maintien, il ne se tord pas lors de l'opération de découpe. On limite le risque de découper un ou plusieurs renforts du câble lors de la découpe du fourreau. Le câble de transmission conserve ainsi ses propriétés de résistance à la traction.

Ainsi, la solution concerne un dispositif de découpe d'un fourreau d'un câble de transmission comprenant :
- des moyens de maintien oblongs du câble lors d'opérations de découpe.
- des moyens de guidage d'un outil de coupe, le câble et les moyens de guidage étant agencés selon une longueur des moyens de maintien,
dans lequel l'outil de coupe est monté mobile le long des moyens de guidage.

Selon une particularité du dispositif de découpe objet de l'invention, les moyens de maintien comprennent une mâchoire.

Un tel dispositif de découpe convient à différents diamètres de câbles de transmission sans qu'il soit nécessaire de l'adapter. Le diamètre maximal de câble de transmission accepté par le dispositif de découpe est fonction des dimensions de la mâchoire et de l'amplitude d'ouverture de celle-ci.

Selon une particularité du dispositif de découpe objet de l'invention, les moyens de guidage comprennent des moyens de butée limitant le débattement de l'outil de coupe.

Les moyens de butée permettent de contrôler la longueur de la découpe à pratiquer. Ainsi, on évite que le fourreau du câble de transmission soit découpé sur une longueur trop grande laissant le milieu de transmission à la merci d'éléments pouvant le dégrader tels que la poussière ou de l'humidité.

Selon une particularité du dispositif de découpe objet de l'invention, les moyens de guidage comprennent une fente pratiquée dans la mâchoire, dans laquelle l'outil de coupe est monté coulissant.

Les moyens de guidage étant pratiqués directement dans la mâchoire, le mouvement de l'outil de coupe est limité par la longueur de la fente. Une telle solution est, de plus, de fabrication simple.

Selon une particularité du dispositif de découpe objet de l'invention, une surface interne de la mâchoire est de forme concave.

Cela permet un meilleur maintien du câble de transmission car la forme concave de la surface interne de la mâchoire épouse au mieux la surface externe du câble. Un seul mors de la mâchoire peut présenter une surface interne concave, le deuxième présentant alors une surface interne plane.

Selon une particularité du dispositif de découpe objet de l'invention, celui-ci comprend un deuxième outil de coupe, le premier et le deuxième outil de coupe étant disposés de part et d'autre d'une ouverture de la mâchoire.

Un tel outil permet de découpe simultanément les deux longueurs d'une fenêtre dans le fourreau d'un câble de transmission de manière simple et rapide. Il suffit ensuite de pratiquer deux découpes radiales aux extrémités des longueurs pour obtenir rapidement et simplement une fenêtre dans le fourreau du câble. Découper une fenêtre dans le fourreau d'un câble de transmission permet d'accéder simplement et rapidement au milieu de transmission pour le manipuler.

Selon une particularité du dispositif de découpe objet de l'invention, les outils de coupe faisant saillie de la mâchoire selon une direction perpendiculaire à une surface interne de la mâchoire, l'intersection de la direction du premier outil de coupe et de la direction du deuxième outil de coupe définit un angle saillant.

Un angle saillant est un angle dont la valeur est strictement inférieure à 180° (degré). En découpant une fenêtre dont la largeur utile, c'est-à-dire la largeur de la fenêtre lorsque celle-ci est projetée sur un plan horizontal, est inférieure au diamètre interne du fourreau du câble de transmission, il devient possible de conserver la structure mécanique du câble de transmission et donc les propriétés mécaniques de résistance à la traction. Dans l'art antérieur, au contraire, la largeur de la fenêtre correspond au demi-diamètre du câble de transmission.

En effet, en pratiquant une fenêtre dont la largeur est inférieure au diamètre interne du câble de transmission, les renforts du câble de transmission restent noyés dans le fourreau, lequel conserve ainsi ses propriétés de résistance mécanique.

Selon une particularité du dispositif de découpe objet de l'invention, la valeur de l'angle ainsi défini varie entre 90 et 160 degrés.

La valeur de l'angle est fonction du diamètre du câble de transmission à découper. Plus le câble de transmission est à diamètre faible plus l'angle est étroit et inversement, plus le diamètre de câble de transmission est grand, plus l'angle tend à se rapprocher de la borne supérieure de l'intervalle.

D'autres caractéristiques et avantages apparaîtront à la lecture de modes de réalisation décrits en référence aux dessins dans lesquels :
- la figure 1 représente une vue en coupe schématique d'un dispositif de découpe de fourreau selon l'invention,
- la figure 2 représente une vue en élévation d'un dispositif de découpe selon un premier mode de réalisation de l'invention,
- la figure 3 représente une vue en élévation d'un dispositif de découpe selon l'invention dans lequel un câble est disposé,
- la figure 4 représente une vue en coupe transversale du dispositif de découpe selon le premier mode de réalisation de l'invention,
- la figure 5 représente une fenêtre découpée dans le fourreau d'un câble de transmission à l'aide d'un dispositif de découpe objet de l'invention ;
- la figure 6 représente une vue en coupe schématique d'un dispositif de découpe de fourreau selon l'invention comprenant un seul outil de coupe.

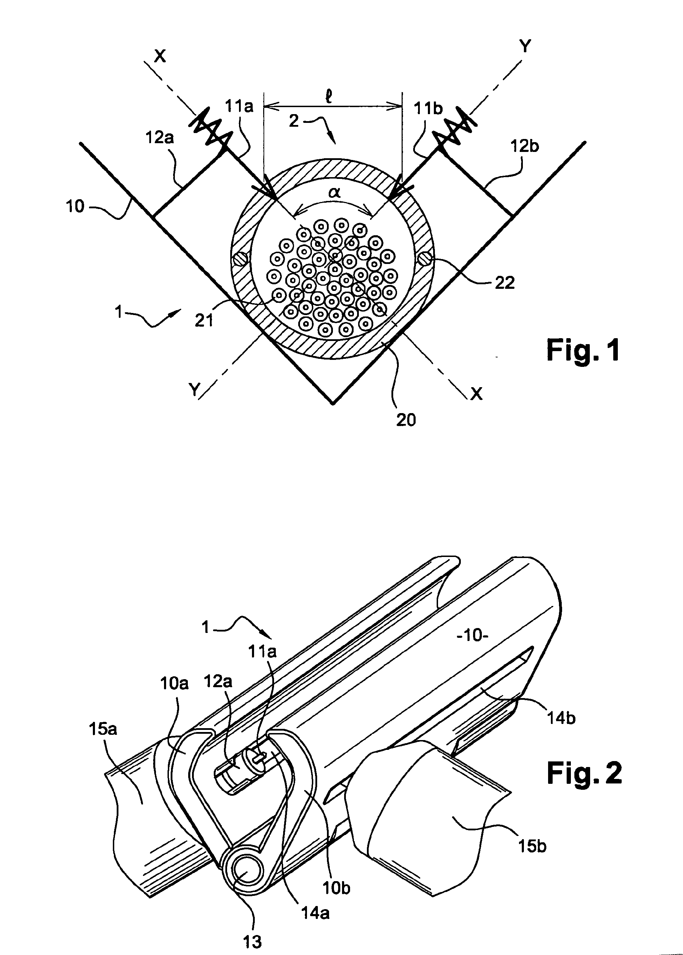

Un dispositif de découpe 1 du fourreau 20 d'un câble de transmission 2 conforme à la présente invention est représenté à la figure 1. Un tel dispositif de découpe 1 comprend un corps 10 creux oblong destiné à recevoir et à maintenir en place le câble de transmission 2. Un corps creux 10 oblong est un corps creux dont la longueur est strictement supérieure à la profondeur.

Un tel corps creux 10 peut avoir une section en forme de V par exemple. Le plus souvent le corps creux 10 est muni d'une articulation (non représentée à la figure 1) assurant la connexion entre les deux ailes du V. Une telle articulation facilite l'insertion du câble de transmission 2 dans le corps creux en permettant l'éloignement des ailes du V, et contribue au maintien en place du câble de transmission 2 une fois celui-ci introduit dans le dispositif de découpe 1.

Le dispositif de découpe 1 comprend également des outils de coupe 11a, 11b destinés à découper le fourreau du câble de transmission 2. Le premier outil de coupe 11a est monté sur la première aile du corps creux 10 tandis que le deuxième outil de coupe 11b est monté sur la deuxième aile du corps creux 10. Les outils de coupe 11a et 11b font saillie vers l'intérieur du corps creux 10.

Les deux outils de coupe 11a et 11b sont disposés symétriquement de part et d'autre de l'ouverture du corps creux 10.

Les outils de coupe 11a et 11b sont fixés à des supports 12a, respectivement 12b. De tels supports 12a, 12b sont montés mobiles par rapport au corps creux 10 permettant ainsi aux outils de coupe de se déplacer le long du corps creux 10 et par conséquent le long du câble de transmission 2 lors des opérations de découpe du fourreau 20.

Le dispositif de découpe 1 comprend également des moyens de guidage (non représentés sur la figure 1) des outils de coupe 11a, 11b. De tels moyens de guidage permettent de découper des entailles longitudinales dans le fourreau du câble de guidage.

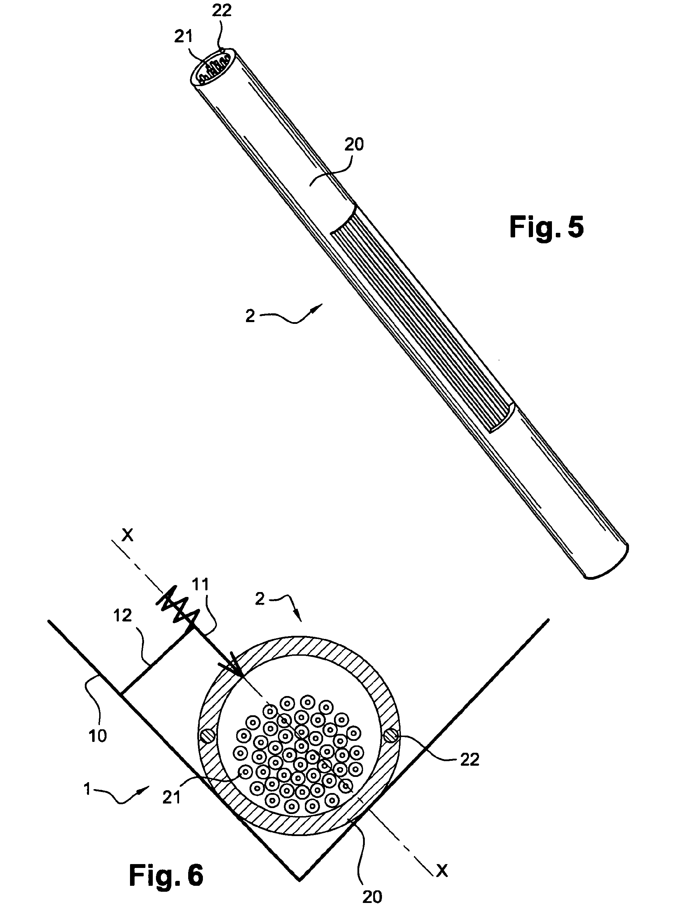

Une telle configuration permet de découper rapidement et simplement une fenêtre telle que représentée à la figure 5 dans le fourreau 20 du câble 2. En effet, un tel outil permet de découper simultanément les deux longueurs de la de manière simple et rapide. Il suffit ensuite de pratiquer deux découpes radiales aux extrémités des longueurs pour obtenir rapidement et simplement la fenêtre. Une telle fenêtre permet d'accéder facilement au milieu de transmission 21, tel que des fibres optiques.

Comme il a été dit plus haut, un câble de transmission 2 comprend un fourreau 20 réalisé le plus souvent en matière plastique par exemple en polyéthylène, polyéthylène haute densité ou en PVC (polychlorure de vinyle), entourant le milieu de transmission, des fibres optiques 21 à la figure 1. Un tel câble de transmission 2 comprend, noyé dans le matériau constituant le fourreau 20, des renforts 22. Les renforts 22 sont réalisés en matériau suffisamment souple pour permettre au câble de transmission 2 d'être enroulé pour le stockage et suffisamment rigide pour conférer des propriétés de résistance à la traction nécessaires à la bonne transmission des données par le milieu de transmission, notamment dans le cas où celui-ci est constitué de fibres optiques. Les renforts utilisés lors la fabrication d'un câble de transmission optique sont par exemple des éléments filaires réalisés en un matériau composite fibre-résine.

Dans un mode de réalisation du dispositif de découpe 1 non représenté sur les figures, les deux outils de coupe 11a et 11b sont montés en vis-à-vis l'un de l'autre. En d'autres mots, l'intersection de la direction X-X du premier outil de coupe 11a et de la direction Y-Y du deuxième outil de coupe 11b défini un angle plat.

Une telle configuration des outils de coupe 11a et 11b permet de réaliser une découpe par éclatement du fourreau 20 en deux parties sensiblement égales.

Lors d'opérations de découpe du fourreau 20 d'un câble de transmission 2, il est intéressant de ne pas détériorer la structure du câble de transmission comme c'est le cas pour une découpe par éclatement. En effet, en découpant le fourreau 20 en deux parties sensiblement égales, on sectionne les renforts 22 ce qui a pour conséquence de fragiliser le câble de transmission 2 en réduisant sa résistance à la traction.

Dans un mode de réalisation particulier du dispositif de découpe 1, les outils de coupes 11a, 11b, sont montés sur le corps creux 10 de sorte que l'angle α défini par l'intersection de la direction X-X et de la direction Y-Y des outils de coupe 11a, 11b est un angle saillant, c'est-à-dire un angle dont la mesure est strictement inférieure à 180° (degrés). Il est alors possible de découper le fourreau 20 en deux parties non égales comme représenté aux figures 1 et 5. Ainsi, en découpant une fenêtre de largeur utile I inférieure au diamètre interne D du fourreau du câble de transmission, il devient possible de conserver la structure mécanique du câble de transmission et donc les propriétés mécaniques de résistance à la traction.

La valeur de l'angle de coupe α est fonction du diamètre du câble de transmission 2 dont on veut découper le fourreau. Ainsi, lorsque le dispositif de découpe 1 est utilisé pour découper des fourreaux de câbles de transmission 2 optiques classiques tels que des câbles piquables ou à piquage tendus, l'angle de coupe α varie entre 90 et 160° (degrés). Ainsi, par exemple, pour un câble de transmission de diamètre extérieur 13mm (millimètres), l'angle de coupe vaut 160°, et la fenêtre obtenue présente une largeur utile de 8 mm. Pour un câble de transmission de diamètre extérieur 10mm, l'angle de coupe vaut par exemple 140°, et la fenêtre obtenue présente une largeur utile de 5 mm

La figure 2 représente un autre mode de réalisation du dispositif de découpe 1. Les éléments constitutifs du dispositif de découpe 1 communs au mode de réalisation décrit en référence à la figure 1 portent les mêmes références et ne seront pas décrits de nouveau.

Dans ce mode de réalisation, chaque aile du V constituant le corps creux 10 se termine par une portion concave 10a, 10b. Le corps creux 10 présente alors une surface interne courbe. Le corps creux 10 est muni d'une articulation 13 assurant la connexion entre les deux ailes du V. Une telle articulation 13 facilite l'insertion du câble de transmission 2 dans le corps creux en permettant l'éloignement des ailes du V. Les portions concaves 10a et 10b forment une dépression adaptée pour recevoir le câble de transmission 2. Un tel corps creux permet de maintenir en place le câble de transmission 2 dans le dispositif de découpe 1.

Une première fente 14a est pratiquée le long d'une première aile du corps creux 10 au niveau de la jonction de l'aile du V avec la première portion concave 10a. Une deuxième fente 14b est, quant à elle, pratiquée le long d'une deuxième aile du corps creux 10 également au niveau de la jonction de l'aile du V avec la deuxième portion concave 10b. De telles fentes 14a, 14b permettent de guider respectivement les outils de coupe 11a, 11b lors des opérations de découpe du fourreau 20. Les fentes 14a, 14b ayant une longueur inférieure à la longueur du corps creux 10, le débattement des outils de coupe 11a, 11b est alors limité par les dimensions des fentes. Il est alors possible de contrôler la longueur de la fenêtre découpée dans le fourreau 20 du câble de transmission 2. En effet, une découpe trop longue du fourreau 20 contribue à la dégradation du milieu de transmission 21, celui-ci étant davantage exposé aux contraintes extérieures telles que l'humidité ou la poussière.

La longueur de la fenêtre ainsi découpée est suffisante pour permettre une manipulation aisée du milieu de transmission, par exemple en vue de la réalisation d'un raccordement d'un usager à un réseau tout en préservant le milieu de transmission 21 des contraintes extérieures. Une telle fenêtre fait, par exemple, 80 mm de long.

Les supports 12a, 12b sur lesquels sont respectivement montés les outils de coupe 11a, 11b sont fixés respectivement à des moyens de préhension 15a, 15b. Les moyens de préhension 15a, 15b permettent à un utilisateur du dispositif de découpe 1 de déplacer les outils de coupes 11a, 11b le long des moyens de guidages 14a, 14b.

En référence à la figure 2, les moyens de préhension 15a, 15b se présentent sous la forme de poignées sur lesquelles les supports 12a, 12b sont fixés. Les supports 12a, 12b sont fixés sur les poignées 15a, 15b par vissage ou peuvent être montés à force.

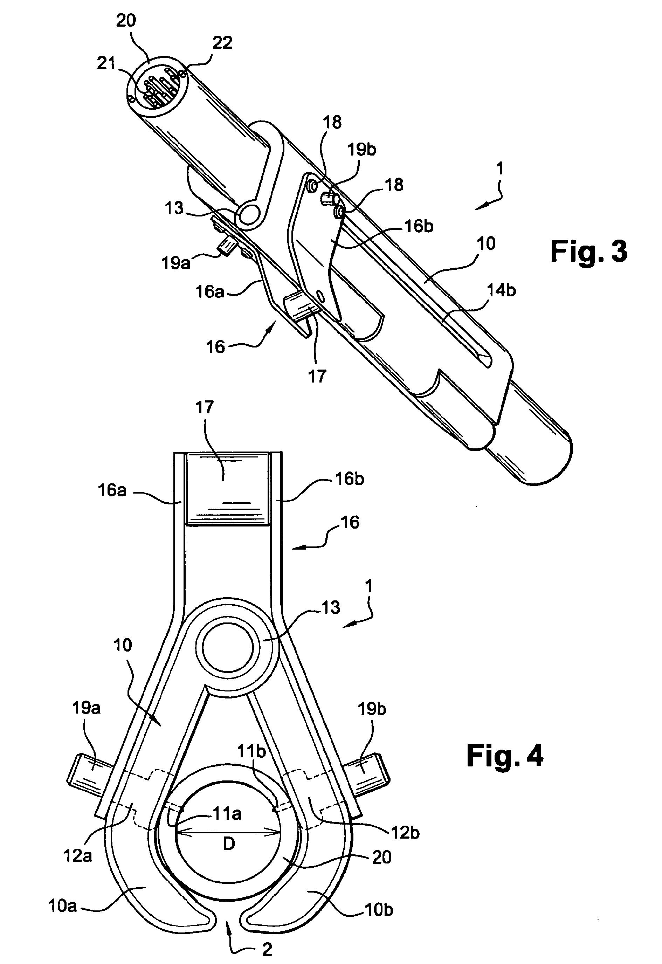

Un troisième mode de réalisation du dispositif de découpe 1 est représenté aux figures 3 et 4. Les éléments constitutifs du dispositif de découpe 1 communs aux modes de réalisation décrits en référence aux figures 1 et 2 portent les mêmes références et ne seront pas décrits de nouveau.

Dans ce mode de réalisation, les outils de coupe 11a, 11b, sont fixés à des moyens de préhension 16. De tels moyens de préhension 16 comprennent deux languettes 16a, 16b de forme sensiblement rectangulaire et présentant une faible épaisseur. De telles languettes 16a, 16b sont incurvées.

Une première languette 16a est fixée par l'une de ses largeurs au support 12a du premier outil de coupe 11a au moyen d'une molette 19a. Une deuxième languette 16b est fixée au support 12b du deuxième outil de coupe 11b au moyen d'une molette 19b. Les languettes 16a, 16b sont montées sur le corps creux 10 de telle sorte que la surface convexe des languettes se trouve en vis-à-vis de la surface extérieure du corps creux 10. Les deux largeurs libres des languettes 16a, 16b sont liées entre elles au moyen d'une pièce de liaison 17, tel qu'un cylindre métallique ou en matière plastique. Les moyens de préhension 16 ainsi constitués présentent une section en forme de Y, les bras du Y étant montés sur le corps creux 10, et le pied du Y faisant saillie du corps creux 10 et permettant à un utilisateur de déplacer les outils de coupe le long des fentes 14a, 14b lors des opérations de découpe du fourreau 20.

Afin d'améliorer le guidage des outils de coupe 11a, 11b, dans les fentes 14a, 14b, les languettes 16a, 16b comprennent, dans une réalisation particulière du dispositif de découpe 1, des tiges 18 destinées à coulisser dans les fentes 14a, 14b.

Les molettes 19a, 19b comprennent dans un mode de réalisation du dispositif de découpe 1 des moyens permettant de régler la profondeur de coupe des outils de coupe 11a, 11b. De tels moyens comprennent par exemple une vis traversant la molette 19a, 19b et qui permet de pousser l'outil de coupe 11a, 11b, à l'intérieur du corps creux 10, une deuxième vis s'étendant perpendiculairement à l'outil de coupe 11a, 11b, permet de bloquer celui-ci une fois la profondeur de coupe réglée.

Les outils de coupe 11a, 11b peuvent être de différents type en fonction des découpes que l'on souhaite pratiquer ou de la nature du matériau constituant le fourreau 20 à découper. Ainsi, les outils de coupes 11a, 11b peuvent consister en une unique lame, en roulette coupante, ou une combinaison de deux ou plusieurs lames montée parallèles entre elles.

De même, le dispositif de découpe 1 objet de l'invention peut comprendre un seul outil de découpe 11a, comme représenté à la figure 6.

## Revendications

1. Dispositif de découpe d'un fourreau (20) d'un câble de transmission (2) comprenant :
- des moyens de maintien oblongs du câbles lors d'opérations de découpe,
- des moyens de guidage (14a, 14b) d'un outil de coupe, (11a, 11b) le câble et les moyens de guidage étant agencés selon une longueur des moyens de maintien, l'outil de coupe (11a, 11b) étant monté mobile le long des moyens de guidage (14a, 14b),
**caractérisé en ce que** les moyens de guidage (14a, 14b) comprennent une fente pratiquée dans les moyens de maintien, la fente étant agencée pour permettre un coulissement de l'outil de coupe (11a, 11b).

2. Dispositif de découpe selon la revendication 1 dans lequel les moyens de maintien comprennent une mâchoire.

3. Dispositif de découpe selon la revendication 1 dans lequel les moyens de guidage (14a, 14b) comprennent des moyens de butée limitant le débattement de l'outil de coupe.

4. Dispositif de découpe selon la revendication 2 dans lequel une surface interne de la mâchoire est de forme concave.

5. Dispositif de découpe selon la revendication 2 comprenant un deuxième outil de coupe (11a, 11b), le premier et le deuxième outil de coupe (11a, 11b) étant disposés de part et d'autre d'une ouverture de la mâchoire.

6. Dispositif de découpe selon la revendication 5 dans lequel les outils de coupe (11a, 11b) faisant saillie de la mâchoire selon une direction perpendiculaire à une surface interne de la mâchoire, l'intersection de la direction du premier outil de coupe et de la direction du deuxième outil de coupe définit un angle saillant.

7. Dispositif de découpe selon la revendication 6 dans lequel la valeur de l'angle ainsi défini varie entre 90 et 160 degrés.

## Patentansprüche

1. Vorrichtung zum Schneiden einer Hülle (20) eines Übertragungskabels (2), die enthält:
- längliche Halteeinrichtungen des Kabels bei Schneidvorgängen,
- Führungseinrichtungen (14a, 14b) eines Schneidwerkzeugs (11a, 11b), wobei das Kabel und die Führungseinrichtungen gemäß einer Länge der Halteeinrichtungen angeordnet sind, wobei das Schneidwerkzeug (11a, 11b) entlang der Führungseinrichtungen (14a, 14b) beweglich montiert ist,
**dadurch gekennzeichnet, dass** die Führungseinrichtungen (14a, 14b) einen in den Halteeinrichtungen ausgearbeiteten Schlitz enthalten, wobei der Schlitz so angeordnet ist, dass er ein Gleiten des Schneidwerkzeugs (11a, 11b) erlaubt.

2. Schneidvorrichtung nach Anspruch 1, wobei die Halteeinrichtungen eine Klemmbacke enthalten.

3. Schneidvorrichtung nach Anspruch 1, wobei die Führungseinrichtungen (14a, 14b) Anschlageinrichtungen enthalten, die den Ausschlag des Schneidwerkzeugs begrenzen.

4. Schneidvorrichtung nach Anspruch 2, wobei eine Innenfläche der Klemmbacke eine konkave Form hat.

5. Schneidvorrichtung nach Anspruch 2, die ein zweites Schneidwerkzeug (11a, 11b) enthält, wobei das erste und das zweite Schneidwerkzeug (11a, 11b) zu beiden Seiten einer Öffnung der Klemmbacke angeordnet sind.

6. Schneidvorrichtung nach Anspruch 5, wobei, da die Schneidwerkzeuge (11a, 11b) von der Klemmbacke in einer Richtung lotrecht zu einer Innenfläche der Klemmbacke vorstehen, der Schnittpunkt der Richtung des ersten Schneidwerkzeugs und der Richtung des zweiten Schneidwerkzeugs einen ausspringenden Winkel definiert.

7. Schneidvorrichtung nach Anspruch 6, wobei die Größe des so definierten Winkels zwischen 90 und 160 Grad variiert.

## Claims

1. Device for cutting a sheath (20) of a transmission cable (2) comprising:
- oblong means for holding the cable during cutting operations,
- guiding means (14a, 14b) for guiding a cutting tool (11a, 11b), the cable and the guiding means being arranged along a length of the holding means, the cutting tool (11a, 11b) being mounted so as to be able to move along the guiding means (14a 14b),
**characterized in that** the guiding means (14a, 14b) comprise a slot made in the holding means, the slot being arranged to allow the cutting tool (11a, 11b) to slide.

2. Cutting device according to Claim 1, in which the holding means comprise a jaw.

3. Cutting device according to Claim 1, in which the guiding means (14a, 14b) comprise stop means limiting the travel of the cutting tool.

4. Cutting device according to Claim 2, in which an inner surface of the jaw is concave in shape.

5. Cutting device according to Claim 2, comprising a second cutting tool (11a, 11b), the first and second cutting tools (11a, 11b) being arranged on either side of an opening of the jaw.

6. Cutting device according to Claim 5, in which, the cutting tools (11a, 11b) projecting from the jaw in a direction perpendicular to an inner surface of the jaw, the intersection of the direction of the first cutting tool and the direction of the second cutting tool defines a salient angle.

7. Cutting device according to Claim 6, in which the value of the angle thus defined varies between 90 and 160 degrees.
